# EUROPÄISCHE PATENTSCHRIFT

(11) **EP 1 725 501 B1**
(45) Veröffentlichungstag und Bekanntmachung des Hinweises auf die Patenterteilung: **28.05.2008**
(21) Anmeldenummer: 05715802.4
(22) Anmeldetag: 07.03.2005
(51) Int. Cl.: C03B 23/11, C03B 23/09

(54) **GLASBEARBEITUNGSMASCHINE**
GLASS WORKING MACHINE
MACHINE DE FACONNAGE DU VERRE

(30) Priorität: 17.03.2004 DE 102004014170
(43) Veröffentlichungstag der Anmeldung: 29.11.2006
(73) Patentinhaber: AMBEG Dr. J. Dichter GmbH, 10829 Berlin (DE)
(72) Erfinder: LANGER, Matthias, 12355 Berlin (DE)
(74) Vertreter: Grünecker, Kinkeldey, Stockmair & Schwanhäusser Anwaltssozietät
(86) Internationale Anmeldenummer: PCT/EP2005/002393
(87) Internationale Veröffentlichungsnummer: WO 2005/092805

(56) Entgegenhaltungen:
- EP-A- 1 369 390
- EP-A- 1 369 391
- EP-A- 1 369 392
- US-A- 3 340 990
- US-A- 4 675 043
- US-A- 5 252 115

## Beschreibung

### Technisches Gebiet

Die Erfindung betrifft eine Glasbearbeitungsmaschine mit einer Vielzahl von rotierenden Haltefuttern für Werkstücke in Form von Hohlkörpern, wie Glasrohren oder halbfertigen Glasbehältnissen, bei der die Haltefutter nacheinander in mindestens eine Arbeitsstation mit einer Vorrichtung überführbar sind, die mit einem in ein offenes Ende des jeweiligen Werkstückes einführbaren Dorn und mindestens einem relativ zum Dorn bewegbaren Formwerkzeug zur Warmverformung des Werkstückendes ausgestattet ist.

### Stand der Technik

Glasbearbeitungsmaschinen der vorstehenden Art, deren Haltefutter-wie im Falle der DE-PS 15 96 410 - kontinuierlich eine Umlaufbahn passieren oder deren Haltefutter - wie im Falle der EP 1 369 390 A2 - im Takt längs einer vorgegebenen Umlaufbahn bewegt werden, sind bekannt. Die Formwerkzeuge ihrer zur Bearbeitung der jeweiligen Werkstücke benötigten Vorrichtungen müssen zur Erzielung einwandfreier Glasbehältnisse jeweils in eine bestimmte Position gegenüber dem Haltefutter überführt werden. Zur Positionierung der Dorne und der Formwerkzeuge der Vorrichtungen werden Justierelemente in Form von Gabeln mit zwei Zinken verwendet, die an ihren freien Enden mit Stützrollen versehen sind, die sich kurz oberhalb der zu bearbeitenden Werkstücke an den Haltefuttern abstützen. Die Bewegung der Gabeln ist mit der Bewegung der an der jeweiligen Arbeitsstation angeordneten Werkzeuge gekoppelt, um letztere in eine zur Achse der Haltefutter ausgerichtete Lage zu überführen. Bei einer anderen, aus der DE 40 28 824 C bekannten Glasbearbeitungsmaschine ist nicht die zum Umformen des Werkstückes dienende Bearbeitungsstation mit einem in das offene Ende des jeweiligen Werkstückes einführbaren Dorn versehen, sondern jedem Haltefutter ein radial und parallel zur Drehachse der Maschine verfahrbarer Dorn zugeordnet. Dass eine derartige Lösung mit einem außerordentlich hohen Aufwand verbunden ist, liegt auf der Hand. Die Bearbeitungsstation weist bei dieser Maschine eine auf einem Kreuzschlitten gelagerte einzelne Formrolle mit einem an den Abstand zwischen zwei aufeinanderfolgenden Haltefuttern angepassten Durchmesser auf.

Die einschlägigen, mit einem Dorn versehenen Vorrichtungen bekannter Glasbearbeitungsmaschinen vermögen hinsichtlich ihrer Positionsgenauigkeit nicht voll zu befriedigen. Ein erster Grund hierfür besteht darin, dass die Umfangsflächen der Haltefutter toleranzbedingte Unterschiede aufweisen und zudem sowohl die Stützflächen für die Stützrollen an den Haltefuttern als auch die Stützrollen selbst nicht nur einem Verschleiß unterworfen, sondern auch Verunreinigungen ausgesetzt sind. Hinzu kommt, dass bei im Takt arbeitenden Maschinen der Genauigkeit, mit der die Haltefutter in ihre Arbeitsposition überführt werden, generell gewisse Grenzen gesetzt sind.

### Darstellung der Erfindung

Der Erfindung liegt die Aufgabe zugrunde, eine Glasbearbeitungsmaschine der in Betracht gezogenen Art mit einer Vorrichtung zu schaffen, bei der eine möglichst genaue Ausrichtung der Lage der Formwerkzeuge zur Achse der Haltefutter gewährleistet ist und mit der sich insbesondere Glasbehältnisse herstellen lassen, deren Abmessungen im Mündungsbereich enge Toleranzen aufweisen, um ihre spätere problemlose Befüllung zu ermöglichen.

Gelöst wird die vorstehende Aufgabe erfindungsgemäß durch die Schaffung einer Glasbearbeitungsmaschine mit einer Vorrichtung, die einen Kreuztisch mit einem motorisch verfahrbaren oberen Schlitten und einem motorisch verfahrbaren unteren Schlitten sowie eine Speicher-, Auswerte- und Steuereinheit aufweist, in die Soll-Positionen eingebbar sind, die die Schlitten einnehmen, wenn die Achse des auf dem oberen Schlitten angeordneten Dornes mit der Achse des sich jeweils oberhalb des Dornes befindlichen Haltefutters fluchtet, und die die Schlitten beim Betrieb der Glasbearbeitungsmaschine in die den jeweiligen Haltefuttern zugeordneten Sollpositionen überführt.

Die erfindungsgemäße Glasbearbeitungsmaschine ermöglicht aufgrund der bei ihr eingesetzten Vorrichtung die Einhaltung enger Fertigungstoleranzen, wie sie beispielsweise bei der Herstellung von Spritzenkörpem verlangt werden. Je nach Art der thermisch oder mechanisch bedingten Lageabweichung der Haltefutter von ihrer Solllage müssen entweder beide Schlitten oder nur ein Schlitten des Kreuztisches bewegt werden, um den oberen Schlitten in seine Solllage zu überführen. Als besonders vorteilhaft erweist es sich, wenn die zum Einsatz gelangende Vorrichtung mit zwei Abstandsmesssensoren versehen ist, deren Abstände von jeweils zwei die Lage der Haltefutter definierenden Messpunkten gemessen und an die Speicher- , Auswerte- und Steuereinheit übermittelt werden, in der ein Vergleich zwischen den gemessenen Istwerten und den den jeweiligen Haltefuttern zugeordneten Sollwerten erfolgt und die im Falle des Auftretens einer Differenz zwischen dem jeweiligen Istwert und dem jeweils dazugehörenden Sollwert eine Verschiebung des oberen Schlittens des Kreuztisches in eine Position steuert, in der der jeweilige Istwert dem jeweiligen Sollwert entspricht.

Gegenstand der Erfindung ist außerdem ein Verfahren zum Bestimmen der in der Auswerte- und Steuereinheit abzuspeichernden, den Sollpositionen des oberen Schlittens des Kreuztisches gegenüber den Achsen der Haltefutter entsprechenden Sollwerten der Abstände. Dieses Verfahren ist dadurch gekennzeichnet, dass in einer Einrichtungsphase durch Verlagern des oberen und unteren Schlittens des Kreuztisches in eine Position, in der die Achse des jeweiligen Haltefutters mit der Achse des Dornes fluchtet, für jedes einzelne Haltefutter die Sollwerte der Abstände zwischen den maschinenseitigen Messpunkten und den Abstandsmesssensoren ermittelt werden.

Weitere Merkmale und Einzelheiten der Erfindung ergeben sich aus den Unteransprüchen und der nachstehenden Beschreibung einer in der beigefügten Zeichnung dargestellten Ausführungsform der Erfindung.

### Kurze Beschreibung der Zeichnungen

Es zeigen:
- Fig. 1: die Draufsicht auf eine erfindungsgemäße Glasbearbeitungsmaschine,
- Fig. 2: im gegenüber der Fig. 1 vergrößerten Maßstab und teilweise im Schnitt eine Seitenansicht der in Fig. 1 gezeigten Vorrichtung der Glasbearbeitungsmaschine und eines ihr zugeordneten Haltefutters,
- Fig. 3: eine Draufsicht auf die Vorrichtung gemäß Fig. 2 und
- Fig. 4: ein Ansicht der Unterseite der Vorrichtung gemäß Fig. 2 und 3.

### Wege zur Ausführung der Erfindung

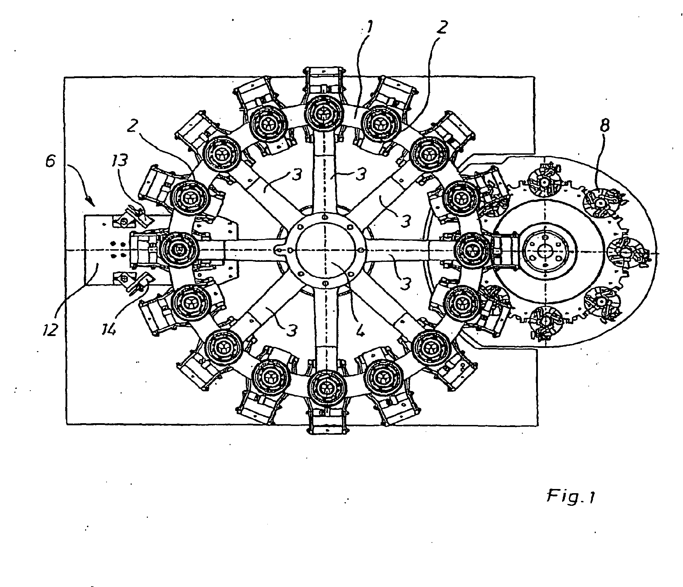

Figur 1 zeigt die Draufsicht auf eine Glasbearbeitungsmaschine mit einem Drehtisch, der einen Haltering 1 für eine Vielzahl von Haltefuttem 2 aufweist. Der Haltering 1 ist über radiale Streben 3 mit einer zentralen Welle 4 verbunden, durch die eine schrittweise Drehbewegung in den Haltering 1 einleitbar ist. Im Zuge der getakteten Drehbewegungen des Halteringes 1 werden die mit Glasrohren 5 bestückten Haltefutter 2 diversen Arbeitsstationen zugeführt. An einer dieser Stationen ist eine allgemein mit 6 bezeichnete Vorrichtung zum Formen der Mündung 7 eines herzustellenden Glasbehältnisses angeordnet, dessen Fertigstellung im in Figur 1 dargestellten rechten Teil der Maschine erfolgt. Der kleinere, rechte Teil der Maschine ist ebenfalls mit einem Drehtisch ausgestattet, der in diesem Fall jedoch eine deutlich geringere Zahl von Haltefuttern 8 aufweist, die im Bereich einer Schnittstelle vom Glasrohr 5 abgetrennte, halbfertige Teile übernehmen, um beispielsweise den Boden von Glasfläschchen zu formen. Da einschlägige Maschinen zum Stand der Technik gehören, erübrigt sich an dieser Stelle eine ausführlichere Beschreibung ihres Aufbaus und ihrer Arbeitsweise.

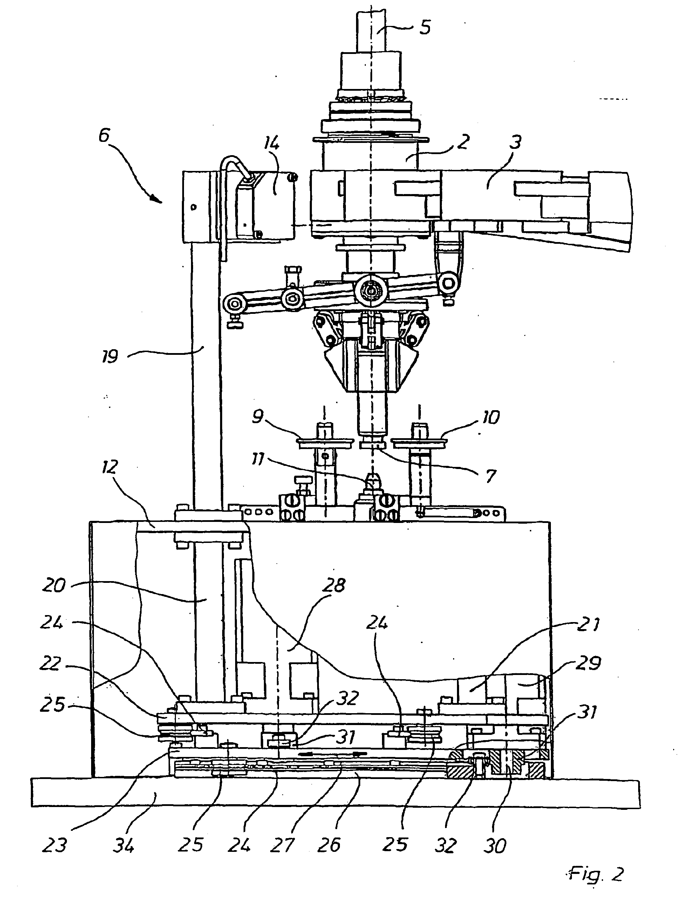

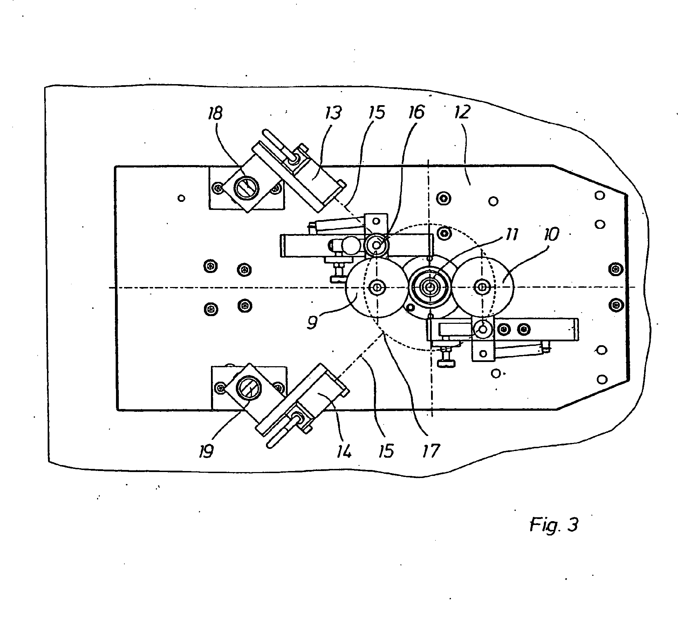

Um die Mündung 7 des zu fertigenden Glasbehältnisses zu formen, bedient man sich, wie den Figuren 2 und 3 entnehmbar, zweier rotierender Formwerkzeuge 9 und 10 sowie eines Dornes 11, der während der Formgebung des Halses des Glasbehältnisses in dessen Mündung 7 eintaucht.

Die Formwerkzeuge 9 und 10 lassen sich durch nicht gezeigte, unterhalb einer sie tragenden Tragplatte 12 der Vorrichtung 6 angeordnete Antriebe linear hin- und herbewegen und der ebenfalls auf der Tragplatte 12 gelagerte Dorn 11 ist durch wiederum nicht gezeigte, unterhalb der Tragplatte 12 angeordnete Antriebsorgane auf- und abbewegbar.

Um die hergestellten, zum Beispiel als Fläschchen oder Spritzenkörper ausgebildeten Glasbehältnisse ohne Probleme automatisch füllen zu können, müssen sehr enge Maßtoleranzen nicht nur hinsichtlich der Größe, sondern auch hinsichtlich der Lage der Mündung 7 gegenüber dem jeweiligen Restkörper des Glasbehältnisses eingehalten werden. Um dieser Forderung Rechnung zu tragen, erweist es sich als unabdingbar, dass während des Formgebungsprozesses die Längsachse des Bestandteil einer Bearbeitungsstation bildenden Dornes 11 mit der Längsachse des Haltefutters 2 fluchtet, wie dies in Figur 2 angedeutet ist.

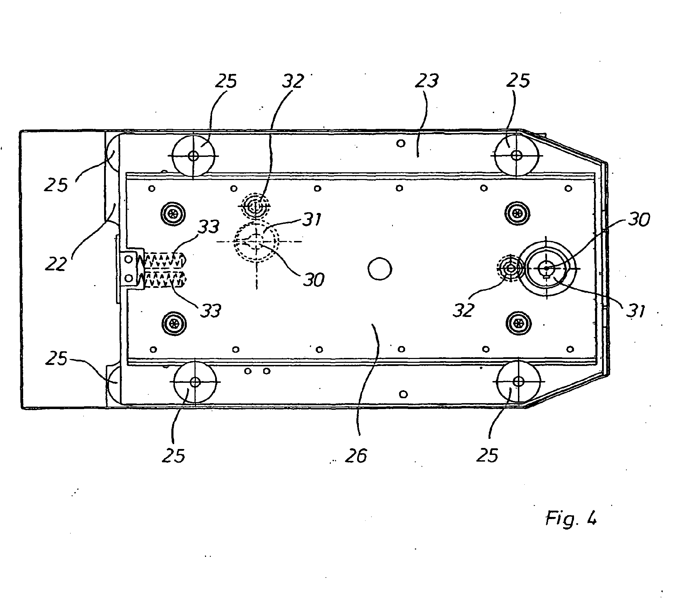

Um die Voraussetzungen für die fluchtende Anordnung der genannten Achsen zu schaffen, ist die in den Figuren 2 bis 4 dargestellte Vorrichtung mit 2 Abstandsmesssensoren 13 und 14 versehen, die in bekannter Weise mit Laserstrahlen 15 arbeiten, welche auf Messpunkte 16, 17 am sich jeweils in der Bearbeitungsstation befindlichen Haltefutter 2 gerichtet sind. Die Abstandsmesssensoren 13 und 14 sind außerhalb des Arbeitsbereiches der Formwerkzeuge 9, 10 an den oberen Enden von auf der Tragplatte 12 befestigten Haltesäulen 18, 19 angeordnet. Um die Längsachse des Dornes 11 in eine fluchtende Position mit der Längsachse des Haltefutters 2, d. h. gleichzeitig mit der Längsachse des Glasrohres 5, zu bringen, ist die Tragplatte 12 über Säulen 20, 21 am oberen Schlitten 22 eines Kreuztisches befestigt, dessen unterer Schlitten 23 Führungsschienen 24 trägt, an denen sich der obere Schlitten 22 über vier an den Eckpunkten eines Rechteckes angeordnete Führungsrollen 25 abstützt, von denen in Figur 2 zwei erkennbar sind. Aufgrund der beschriebenen Anordnung kann der obere Schlitten 22 senkrecht zur Zeichenebene gerichtete Bewegungen ausführen. Der untere Schlitten 23 ist ebenfalls mit Führungsrollen 25 ausgestattet, die längs zweier im Abstand voneinander an einer Grundplatte 26 angeordneter Führungsschienen 24 in Richtung des Doppelpfeils 27 hin- und herbewegbar sind. Zur Einleitung von Bewegungen in die Schlitten 22 und 23 dienen Servomotore 28 und 29, auf deren Wellen 30 Kurvenscheiben 31 befestigt sind, die sich gegen Stützrollen 32 abstützen. Zur Sicherung des Kontaktes zwischen den Kurvenscheiben 31 und den Stützrollen 32 dienen - wie in Figur 4 angedeutet - zwischen der Grundplatte 26 und dem unteren Schlitten 23 angeordnete Federn 33. Entsprechende Federn sind auch zwischen dem Schlitten 23 und dem Schlitten 22 vorgesehen. Aufgrund von durch eine nicht dargestellte Auswerte- und Steuereinheit gelieferten Befehlen können sich die Wellen 30 der Servomotoren 28, 29 zusammen mit ihren Kurvenscheiben 31 um bestimmte Beträge drehen. Je nach der Größe der Drehung ändern sich die Abstände zwischen den Kurvenscheiben 31 und den Stützrollen 32, wobei die vorgenannten Abstandsänderungen zu entsprechenden Verlagerungen der Schlitten 22, 23 führen.

Der beschriebene Aufbau der Vorrichtung erlaubt es, in einem sogenannten Kalibrierlauf für jedes einzelne Haltefutter 2 die optimale Position der Formwerkzeuge 9, 10 gegenüber dem zu bearbeitenden Glasrohr 5 zu ermitteln, indem man die Achse des Dornes 11 in eine fluchtende Lage mit der Achse des jeweiligen Haltefutters 2 bringt und die in dieser Position von den Sensoren 13 und 14 ermittelten Messwerte als Sollwerte in der Auswerte- und Steuereinheit ablegt. Zur Abstandsmessung wird dabei von den im rechten Winkel zueinander angeordneten Sensoren 13, 14 jeweils ein Laserstrahl 15 ausgesandt, welcher an den Messpunkten 16, 17 der jeweiligen Haltefutter reflektiert wird. Die entfernungsabhängige Position des reflektierten Laserstrahls 15 auf einer Messzeile des jeweiligen Sensors 13 bzw. 14 entspricht dabei dem der gewünschten Position entsprechenden Sollwert. Diese auch als Triangulationsmessung bezeichnete Art der Messung ist als solche bekannt. Nach der Messung wird die Position mathematisch in ein um 45° versetztes Koordinatensystem transferiert, um der Position des Haltefutters entsprechende Werte mit Bezug auf die Bewegungsachsen der Schlitten 22 und 23 des Kreuztisches zu erhalten. Nachdem für jedes einzelne Haltefutter 2 die Sollwerte bestimmt wurden, kann die Maschine in Betrieb genommen werden.

Während des Betriebes wird nach dem Einlauf eines jeden Haltefutters 2 in die Bearbeitungsstation mit Hilfe der Abstandssensoren 13, 14 ein der aktuellen Istposition entsprechender Istwert gemessen und an die Auswerte- und Steuereinheit übertragen. In der Auswerte- und Steuereinheit erfolgt vor der Einwirkung der Formwerkzeuge 9 und 10 auf den Glaskörper und dem Eintauchen des Dornes 11 in die herzustellende Mündung 7 ein Sollwert-Istwert-Vergleich und im Fall des Vorliegens von Differenzen die Einleitung von Verschiebebewegungen in die Schlitten 22, 23, um die Differenzen zwischen den jeweiligen Ist- und Sollwerten auf Null zu reduzieren. Um bei hohen Taktzahlen ein schnelles Überführen der Schlitten 22, 23 in ihre Sollposition zu ermöglichen, kann schon beim Einfahren eines Haltefutters 2 in die Bearbeitungsstation die aus dem jeweils vorherigen Umlauf des Halteringes 1 bekannte Sollposition angefahren werden, so dass bei erneuten Positionsabweichungen lediglich noch geringfügige Korrekturbewegungen vonnöten sind.

Die Abstandsmesssensoren 13, 14 müssen nicht zwingend auf der Tragplatte 12 angeordnet sein. Man könnte sie vielmehr auch unter Verwendung längerer Haltesäulen auf der Grundplatte 34 der Maschine anordnen. Darüber hinaus ist es möglich, auf Abstandsmesssensoren völlig zu verzichten. Beide Varianten sind zwar mit einer Beeinträchtigung der Positionsgenauigkeit verbunden, bieten aber gegenüber den bekannten Konstruktionen bereits Vorteile. Allerdings sollte in diesen Fällen das Einrichten der Maschine unter möglichst gleichen Bedingungen wie bei der Produktion erfolgen; die Maschine sollte mit anderen Worten u. a. warmgelaufen sein und die Hallentemperatur konstant bleiben.

## Patentansprüche

1. Glasbearbeitungsmaschine mit einer Vielzahl von rotierenden Haltefuttern (2) für Werkstücke in Form von Hohlkörpern, wie Glasrohren (5) oder halbfertigen Glasbehältnissen, bei der die Haltefutter (2) nacheinander in mindestens eine Arbeitsstation mit einer Vorrichtung (6) überführbar sind, die mit einem in ein offenes Ende des jeweiligen Werkstückes einführbaren Dorn (11) und mindestens einem relativ zum Dorn (11) bewegbaren Formwerkzeug (9) zur Warmverformung des Werkstückendes ausgestattet ist, **dadurch gekennzeichnet, dass** die Vorrichtung einen Kreuztisch mit einem motorisch verfahrbaren oberen Schlitten (22) und einem motorisch verfahrbaren unteren Schlitten (23) sowie eine Speicher-, Auswerte- und Steuereinheit aufweist, in die Soll-Positionen eingebbar sind, die die Schlitten (22, 23) einnehmen, wenn die Achse des auf dem oberen Schlitten (22) angeordneten Dornes (11) mit der Achse des sich jeweils oberhalb des Dornes (11) befindlichen Haltefutters (2) fluchtet, und die die Schlitten (22, 23) beim Betrieb der Glasbearbeitungsmaschine in die den jeweiligen Haltefuttern (2) zugeordneten Sollpositionen überführt.

2. Glasbearbeitungsmaschine nach Anspruch 1, **dadurch gekennzeichnet, dass** sie mit zwei Abstandsmesssensoren (13, 14) versehen ist, deren Abstände von jeweils zwei die Lage der Haltefutter (2) definierenden Messpunkten (16, 17) gemessen und an die Speicher-, Auswerte- und Steuereinheit übermittelt werden, in der ein Vergleich zwischen den gemessenen Istwerten und den den jeweiligen Haltefuttem zugeordneten Sollwerten erfolgt und die im Falle des Auftretens einer Differenz zwischen dem jeweiligen Istwert und dem jeweils dazugehörenden Sollwert eine Verschiebung des oberen Schlittens des Kreuztisches in eine Position steuert, in der der jeweilige Istwert dem jeweiligen Sollwert entspricht.

3. Glasbearbeitungsmaschine nach Anspruch 2, **dadurch gekennzeichnet, dass** das Formwerkzeug (9, 10), der Dorn (11) und die Abstandsmesssensoren (13, 14) auf dem oberen Schlitten (22) des Kreuztisches angeordnet sind.

4. Glasbearbeitungsmaschine nach Anspruch 2, **dadurch gekennzeichnet, dass** das Formwerkzeug (9, 10), der Dorn (11) und die Abstandsmesssensoren (13, 14) auf einer Tragplatte (12) angeordnet sind, die fest mit dem oberen Schlitten (22) des Kreuztisches verbunden ist.

5. Glasbearbeitungsmaschine nach einem der Ansprüche 2 bis 4, **dadurch gekennzeichnet, dass** die Abstandmesssensoren (13, 14) von Laserstrahlsensoren gebildet werden, die so justiert sind, dass die von ihnen ausgesandten Strahlen (15) einen Winkel von 90° zueinander einnehmen.

6. Glasbearbeitungsmaschine nach einem der Ansprüche 1 bis 5, **dadurch gekennzeichnet, dass** zum Antrieb der Schlitten (22, 23) des Kreuztisches Servomotoren (28, 29) dienen, deren Wellen (30) mit Kurvenscheiben (31) versehen sind, deren Abwälzbewegung gegenüber Stützrollen (32) zu einer Verlagerung der Schlitten (22, 23) führt.

7. Glasbearbeitungsmaschine nach Anspruch 6, **dadurch gekennzeichnet, dass** die Stützrollen (32) durch Federn (33) gegen die Kurvenscheiben (31) gedrückt werden.

8. Glasbearbeitungsmaschine nach einem der Ansprüche 1 bis 7, **dadurch gekennzeichnet, dass** die Vorrichtung zwei Formrollen (9, 10) aufweist, die im Winkel von 180° zueinander versetzt angeordnet sind.

9. Glasbearbeitungsmaschine nach einem der Ansprüche 1 bis 8, **dadurch gekennzeichnet, dass** die Haltefutter (2) Bestandteile eines Drehtisches sind, der eine getaktete Drehbewegung ausführt.

10. Verfahren zum Bestimmen von in der Auswerte- und Steuereinheit der Vorrichtung einer Glasbearbeitungsmaschine gemäß einem der Ansprüche 2 bis 9 abzuspeichernden, den Sollpositionen des oberen Schlittens des Kreuztisches gegenüber den Achsen der Haltefutter entsprechenden Sollwerten der Abstände, **dadurch gekennzeichnet, dass** in einer Einrichtungsphase durch Verlagern des oberen und unteren Schlittens (22, 23) des Kreuztisches in eine Position, in der die Achse des jeweiligen Haltefutters (2) mit der Achse des Dornes (11) fluchtet, für jedes einzelne Haltefutter (2) die Sollwerte der Abstände zwischen den maschinenseitigen Messpunkten (16, 17) und den Abstandsmesssensoren (13, 14) ermittelt werden.

## Claims

1. Glass working machine with a plurality of rotating chucks (2) for workpieces in the form of hollow bodies, such as glass tubes (5) or semi-finished glass containers, which chucks (2) can be transferred one after the other into at least one work station by means of a device (6) which is equipped with a mandrel (11) which can be introduced into an open end of the respective workpiece and at least one shaping tool (9) displaceable relative to the mandrel (11) for heat-deforming the workpiece end, **characterised in that** the device comprises a compound table with a top carriage (22) displaceable by a motor and a bottom carriage (23) displaceable by a motor, as well as a memory, evaluation and control unit in which can be input desired positions which the carriages (22, 23) assume when the axis of the mandrel (11) disposed on the top carriage (22) is disposed in alignment with the axis of the chuck (2) disposed respectively above the mandrel (11), and which transfers the carriages (22, 23) into the desired positions associated with the respective holding chucks (2) during operation of the glass working machine.

2. Glass working machine as claimed in claim 1, **characterised in that** it is provided with two distance measuring sensors (13, 14), the distances of which are measured from two respective measurement points (16, 17) defining the position of the chucks (2) and transmitted to the memory, evaluation and control unit, where a comparison is made between the measured actual values and the desired values associated with the respective chucks, and if a difference occurs between the respective actual value and the respective associated desired value it controls a displacement of the top carriage of the compound table into a position in which the respective actual value corresponds to the respective desired value.

3. Glass working machine as claimed in claim 2, **characterised in that** the shaping tool (9, 10), the mandrel (11) and the distance measuring sensors (13, 14) are disposed on the top carriage (22) of the compound table.

4. Glass working machine as claimed in claim 2, **characterised in that** the shaping tool (9, 10), the mandrel (11) and the distance measuring sensors (13, 14) are disposed on a base plate (12) which is fixedly connected to the top carriage (22) of the compound table.

5. Glass working machine as claimed in one of claims 2 to 4, **characterised in that** the distance measuring sensors (13, 14) are laser beam sensors which are adjusted so that the beams (15) emitted by them assume an angle of 90° with respect to one another.

6. Glass working machine as claimed in one of claims 1 to 5, **characterised in that** servo-motors (28, 29) are used to drive the carriages (22, 23) of the compound table, the shafts (30) of which are provided with disc cams (31), the rolling movement of which relative to support rollers (32) causes a displacement of the carriages (22, 23).

7. Glass working machine as claimed in claim 6, **characterised in that** the support rollers (32) are pushed against the disc cams (31) by springs (33).

8. Glass working machine as claimed in one of claims 1 to 7, **characterised in that** the device has two shaping rollers (9, 10) which are disposed offset from one another at an angle of 180°.

9. Glass working machine as claimed in one of claims 1 to 8, **characterised in that** the chucks (2) are parts of a rotary table which carries out a clocked rotating movement.

10. Method of determining desired values of the distances, the desired values to be stored in the evaluation and control unit of the device of a glass working machine as claimed in one of claims 2 to 9, the desired values representing distances corresponding to the desired positions of the top carriage of the compound table relative to the axes of the chucks, **characterised in that** the desired values of the distances between the machine-end measurement points (16, 17) and the distance measuring sensors (13, 14) are determined for every individual chuck (2) during a set-up phase by displacing the top and bottom carriage (22, 23) of the compound table into a position in which the axis of the respective chuck (2) is aligned with the axis of the mandrel (11).

## Revendications

1. Machine de façonnage du verre, comprenant un pluralité de mandrins rotatifs (2) pour des pièces en forme de corps creux, comme des tubes en verre (5) ou des récipients en verre semi-finis, dans laquelle les mandrins (2) sont aptes à être transférés successivement dans au moins une station de travail avec un dispositif (6) qui est équipé d'une broche (11) apte à être introduite dans une extrémité ouverte de la pièce et d'au moins un outil de formage (9) mobile par rapport à la broche (11) et destiné au façonnage à chaud de l'extrémité de ladite pièce, **caractérisée en ce que** le dispositif comporte une table à mouvements croisés, avec un chariot supérieur (22) mobile à l'aide d'un moteur, et un chariot inférieur (23) mobile à l'aide d'un moteur, et une unité de mémoire, d'analyse et de commande dans laquelle peuvent être entrées des positions théoriques que les chariots (22, 23) adoptent quand l'axe de la broche (11) disposée sur le chariot supérieur (22) est dans l'alignement de l'axe du mandrin (2) qui se trouve au-dessus de la broche (11), et qui amène les chariots (22, 23), lors du fonctionnement de la machine de façonnage du verre, dans les positions théoriques associées aux mandrins (2) respectifs.

2. Machine de façonnage du verre selon la revendication 1, **caractérisée en ce qu'**elle est pourvue de deux capteurs de mesure de distance (13, 14) dont les distances par rapport à deux points de mesure (16, 17) définissant la position des mandrins (2) sont mesurées et sont transmises à l'unité de mémoire, d'analyse et de commande, dans laquelle a lieu une comparaison entre les valeurs réelles mesurées et les valeurs théoriques associées aux mandrins respectifs et qui, au cas où une différence apparaît entre la valeur réelle et la valeur théorique correspondante, commande un déplacement du chariot supérieur de la table à mouvements croisés jusqu'à une position dans laquelle la valeur réelle correspond à la valeur théorique.

3. Machine de façonnage du verre selon la revendication 2, **caractérisée en ce que** l'outil de formage (9, 10), la broche (11) et les capteurs de mesure de distance (13, 14) sont disposés sur le chariot supérieur (22) de la table à mouvements croisés.

4. Machine de façonnage du verre selon la revendication 2, **caractérisée en ce que** l'outil de formage (9, 10), la broche (11) et les capteurs de mesure de distance (13, 14) sont disposés sur une plaque de support (12) qui est solidaire du chariot supérieur (22) de la table à mouvements croisés.

5. Machine de façonnage du verre selon l'une des revendications 2 à 4, **caractérisée en ce que** les capteurs de mesure de distance (13, 14) sont formés par des capteurs laser qui sont ajustés pour que les rayons (15) émis par eux forment un angle de 90° l'un par rapport à l'autre.

6. Machine de façonnage du verre selon l'une des revendications 1 à 5, **caractérisée en ce que** l'entraînement des chariots (22, 23) de la table à mouvements croisés est assuré par des servomoteurs (28, 29) dont les arbres (30) sont pourvus de cames (31) dont le mouvement de roulement par rapport à des galets d'appui (32) entraîne un déplacement des chariots (22, 23).

7. Machine de façonnage du verre selon la revendication 6, **caractérisée en ce que** les galets d'appui (32) sont pressés par des ressorts (33) contre les cames (31).

8. Machine de façonnage du verre selon l'une des revendications 1 à 7, **caractérisée en ce que** le dispositif comporte deux galets de formage (9, 10), qui sont décalés suivant un angle de 180° l'un par rapport à l'autre.

9. Machine de façonnage du verre selon l'une des revendications 1 à 8, **caractérisée en ce que** les mandrins (2) font partie d'une table rotative qui décrit un mouvement rotatif cadencé.

10. Procédé pour définir des valeurs théoriques de distance qui doivent être mises en mémoire dans l'unité d'analyse et de commande du dispositif de la machine de façonnage du verre selon l'une des revendications 2 à 9 et qui correspondent aux positions théoriques du chariot supérieur de la table à mouvements croisés, par rapport aux axes des mandrins, **caractérisé en ce que** lors d'une phase d'installation, grâce au déplacement des chariots supérieur et inférieur (22, 23) de la table à mouvements croisés jusqu'à une position dans laquelle l'axe du mandrin (2) est dans l'alignement de l'axe de la broche (11), les valeurs théoriques des distances entre les points de mesure (16, 17) situés côté machine et les capteurs de mesure de distance (13, 14) sont déterminées pour chaque mandrin individuel (2).
